# EUROPÄISCHE PATENTSCHRIFT

(11) **EP 0 757 193 B1**
(45) Veröffentlichungstag und Bekanntmachung des Hinweises auf die Patenterteilung: **02.12.1998**
(21) Anmeldenummer: 96111404.8
(22) Anmeldetag: 16.07.1996
(51) Int. Cl.: F16H 61/32

(54) **Elektrische Schaltvorrichtung für Wechselgetriebe von Kraftfahrzeugen**
Electric control device for automotive gearbox
Dispositif de commande électrique pour boîte de vitesse véhicule

(30) Priorität: 29.07.1995 DE 19527893
(43) Veröffentlichungstag der Anmeldung: 05.02.1997
(73) Patentinhaber: Ford Global Technologies, Inc., Dearborn, Michigan 48126-2490 (US)
(72) Erfinder: Schaller, Gerhard, 50859 Köln (DE)
(74) Vertreter: Messulam, Alec Moses

(56) Entgegenhaltungen:
- EP-A- 0 636 819
- WO-A-93/10379
- US-A- 4 291 586

## Beschreibung

Die Erfindung bezieht sich auf eine elektrische Schaltvorrichtung für Wechselgetriebe von Kraftfahrzeugen, der im Oberbegriff des Patentanspruches 1 erläuterten Art.

Aus der DE-AS 1 139 758 ist eine elektrische Schaltvorrichtung für Wechselgetriebe von Kraftfahrzeugen, der im Oberbegriff des Patentanspruches 1 erläuterten Art bekannt. Bei dieser bekannten elektrischen Schaltvorrichtung sind für die zwei erforderlichen, im wesentlichen quer zueinander verlaufenden Schaltbewegungen (R = Rotation und L = Linear) der bewegbaren Getriebeschaltglieder zwei getrennte elektrische Einrichtungen erforderlich, für die drehende Bewegung (R) ein an einem Hebelarm angreifender Elektromagnet und für die andere lineare Bewegung (L) ein Elektromotor mit einer Gewindespindel und einer darauf angeordneten, gegen Drehung festgehaltenen und axial geführten Mutter.

Bei der bekannten elektrischen Schaltvorrichtung wird somit die zum Vorwählen erforderliche drehende Bewegung von einem Elektromagneten und die zum Einrücken erforderliche lineare Bewegung von einem Elektromotor bereitgestellt. Die Vorwählbewegung über den Elektromagneten ermöglicht hierbei eine von drei Schaltgassen anzuwählen, und die andere Bewegung über den Elektromotor, die Gewindespindel und die Mutter ermöglicht durch Kontrolle der Drehzahl des Elektromotors eine gesteuerte Einrückbewegung. Daher sind zwei getrennte, unterschiedliche Steuereinrichtungen für die beiden elektrischen Schaltvorrichtungen erforderlich.

Die bekannte elektrische Schaltvorrichtung für ein Wechselgetriebe ist in der aufgezeigten Form zweckmäßig, da bei diesem Wechselgetriebe zum Vorwählen der Schaltgassen eine drehende Bewegung und zum Einrücken der Gänge eine lineare Bewegung erforderlich ist.

Sobald bei einem Wechselgetriebe zum Vorwählen eine lineare Bewegung erforderlich ist und zum Einrücken eine drehende Bewegung vorgesehen werden muß, ergeben sich Schwierigkeiten bei der gewünschten kontrollierten Einrückbewegung der verschiedenen Gänge. Insbesondere dann, wenn bei einem automatisch schaltbaren Wechselgetriebe Synchronisiereinrichtungen verwendet werden, bei denen es äußerst wünschenswert ist, die Einrückbewegung während Auf- und Abwärtsschaltungen in ihrem Kraftverlauf möglichst genau angepaßt zu steuern.

Aus der EP-A-0 636 819 ist eine Schaltvorrichtung für mehrstufige Schaltgetriebe bekannt, die dem Oberbegriff des Patentanspruches 1 entspricht und bei der eine drehende Bewegung von einer Gewindespindel abgeleitet wird, indem zwischen der Gewindespindel und der Linearführung der Mutter über eine Kupplung eine zeitweilige, kontrollierte, drehfeste Verbindung hergestellt wird. Diese kontrollierte, drehfeste Verbindung besteht aus einer Rutschkupplung, die eine drehbare Bewegung des Schaltelementes bewirkt, solange das Schaltelement nicht über den Schaltstift eines Elektromagneten gegen Drehung festgehalten wird. Das Drehmoment der Rutschkupplung muß hierbei durch eine entsprechende Einstellung sichergestellt werden.

Die Aufgabe der vorliegenden Erfindung ist es, eine elektrische Schaltvorrichtung für Wechselgetriebe von Kraftfahrzeugen, der im Oberbegriff des Patentanspruches 1 erläuterten Art derart zu verbessern, daß beide erforderlichen Schaltbewegungen (R und L) von der drehenden Bewegung einer Gewindespindel abgeleitet werden, so daß sowohl bei einer drehenden Bewegung als auch bei einer linearen Bewegung der Kraftverlauf während der Ausführung der Bewegungen durch eine entsprechende einzige Steuereinrichtung für den die Gewindespindel antreibenden Elektromotor bewerkstelligt werden kann.

Gemäß der Erfindung wird diese Aufgabe gelöst, indem eine elektrische Schaltvorrichtung für Wechselgetriebe von Kraftfahrzeugen, der im Oberbegriff des Patentanspruches 1 erläuterten Art, die im Kennzeichenteil des Patentanspruches 1, bzw. des Anspruches 2, bzw. des Anspruches 3 aufgezeigten Merkmale aufweist.

Dadurch, daß auch die eine, drehende Bewegung (R) von der von einem Elektromotor kontrolliert gedrehten Gewindespindel abgeleitet wird, indem zwischen der Gewindespindel und der Linearführung der Mutter über eine Kupplung eine zeitweilige, kontrollierte drehfeste Verbindung hergestellt wird, kann durch eine entsprechende Steuerung des Elektromotors auch ein erwünschter Kraftverlauf während der drehenden Bewegung bereitgestellt werden.

Die Erfindung wird anhand einiger in den Zeichnungen gezeigten Ausführungsbeispielen näher erläutert. Es zeigt:
- Fig. 1: eine Ausführungsform einer elektrischen Schaltvorrichtung;
- Fig. 2: eine weitere Ausführungform einer elektrischen Schaltvorrichtung und
- Fig. 3: eine andere Ausführungsform der elektrischen Schaltvorrichtung gemäß der Erfindung.

In den verschiedenen Figuren sind übereinstimmende Bauteile mit den gleichen Bezugszeichen versehen und sofern diese Bauteile baulich voneinander abweichen, sind die entsprechenden Bauteile mit Bezugszeichen mit einem Strich-Index gekennzeichnet.

Eine elektrische Schaltvorrichtung für ein Wechselgetriebe eines Kraftfahrzeuges besteht zunächst aus einem Gleichstrommotor 1 mit einem unmittelbar angeflanschtem Reduktionsgetriebe 2 und einer Abtriebswelle 3.

Dem Untersetzungsgetriebe 2 ist ein Positions- oder Winkelsensor 4 zugeordnet, der in Zusammenhang mit einer entsprechenden elektronischen Steuereinrichtung die Steuerung des Elektromotors 1 überwacht.

Die Ausgangswelle 3 ist in einer nicht näher gezeigten Art und Weise mit einer Gewindespindel 5 verbunden, oder mit dieser einstückig. Auf der Gewindespindel 5 ist eine Gewindemutter 6 angeordnet, die einen radial vorragenden Schaltfinger 7 trägt und die in einer Linearführung 8 gegen Drehung festgehalten aber axial bewegbar ist. Die Linearführung 8 kann in besonders einfacher Weise durch einen Längsschlitz 9 in einer rohrförmigen Verschiebemuffe 10 gebildet werden, die in ihrem Inneren die Mutter 6 aufnimmt.

Benachbart dem im Untersetzungsgetriebe 2 gelagerten Ende der Gewindespindel 5 ist eine Magnetspule 11 angeordnet, die mit einer radialen Kupplungsfläche 12 versehen ist, die mit einer entsprechend ausgebildeten Gegen-Kupplungsfläche 13 an der Endfläche der Verschiebemuffe 10 zusammenwirken kann. An den beiden Kupplungsflächen 12 und 13 sind radiale Planverzahnungen vorgesehen, die bei einem minimalen Hub der Verschiebemuffe 10 eine formschlüssige Verbindung zur Magnetspule 11 und damit zum feststehenden Untersetzungsgetriebe 2 herstellen.

Am anderen, freien Ende 14 der Gewindespindel 5 ist ein Kupplungsflansch 15 über einen Keil 16 und eine Schraube 17 drehfest mit der Gewindespindel 5 verbunden. Auf dem Kupplungsflansch 15 ist eine weitere Magnetspule 18 drehfest angeordnet, die mit einer radialen Kupplungsfläche 19 versehen ist, die mit einer entsprechend ausgebildeten radialen Kupplungsfläche 20 am gegenüberliegenden Ende der Verschiebemuffe 10 zusammenwirken kann.

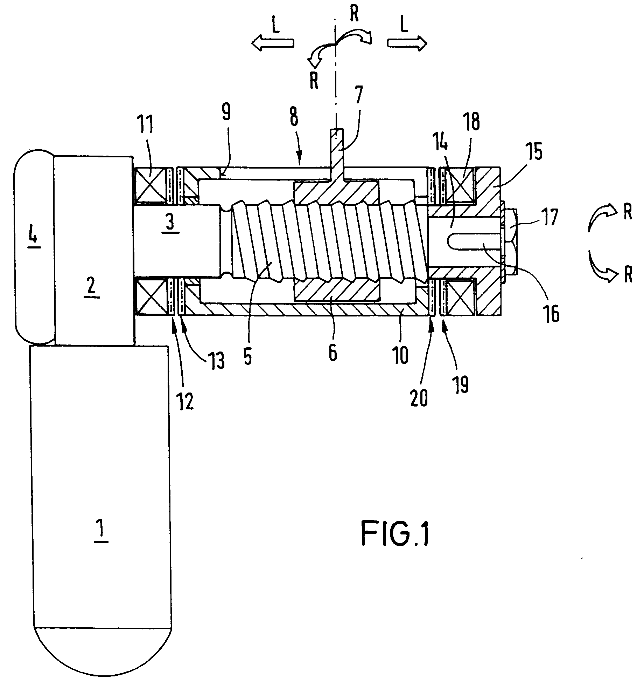

Bei der in Fig. 1 gezeigten Ausführungsform ist zur klareren Erläuterung die sich einerseits auf dem einen Ende der Gewindespindel 5 und andererseits am Außenumfang der Mutter 6 abstützende Verschiebemuffe 10 in einer Mittelstellung gezeichnet, in der sie sich jeweils nur kurzfristig in einer Umschaltphase befindet.

In tatsächlicher Funktion befindet sich die Verschiebemuffe 10 durch Einschalten der Magnetspule 18, z.B. in einer in Fig. 1 gesehen nach rechts verschobenen Stellung, in der die radialen Kupplungsflächen 19 und 20 eine drehfeste Verbindung zwischen der Gewindespindel 5 über den Kupplungsflansch 15 zur Verschiebemuffe 10 herstellen, wodurch über den Längsschlitz 9 der Schaltfinger 7 in eine drehende Bewegung R mitgenommen wird, in der er z.B. eine von mehreren Schaltgassen des Wechselgetriebes vorwählt.

Unmittelbar nach der abgeschlossenen Vorwählbewegung wird die Magnetspule 18 abgeschaltet und die Magnetspule 11 eingeschaltet, wodurch die Verschiebemuffe 10 in Fig. 1 gesehen nach links bewegt wird, wodurch die radialen Kupplungsflächen 13 und 12 eine drehfeste Verbindung zum feststehenden Gehäuse des Untersetzungsgetriebes herstellen. Wird nun die Gewindespindel 5 in kontrollierter Weise gedreht, so bewirkt dies über die Mutter 6 eine axiale, lineare Bewegung L des Schaltfingers 7 im Längsschlitz 9, die zum Einlegen einer Gangstufe herangezogen werden kann.

Es ist leicht zu erkennen, daß durch eine entsprechende Umschaltung zwischen den beiden Magnetspulen 11 und 18 und einer entsprechenden Steuerung des Elektromotors 1 kontrollierte Winkelbewegungen R und entsprechend kontrollierte Linearbewegungen L des Schaltfingers 7 bereitgestellt werden können. Durch eine heute allgemein verfügbare elektronische Steuerung des Elektromotors 1 kann hierbei der Kraftverlauf während der ausgeführten Bewegungen genauestens gesteuert und überwacht erfolgen.

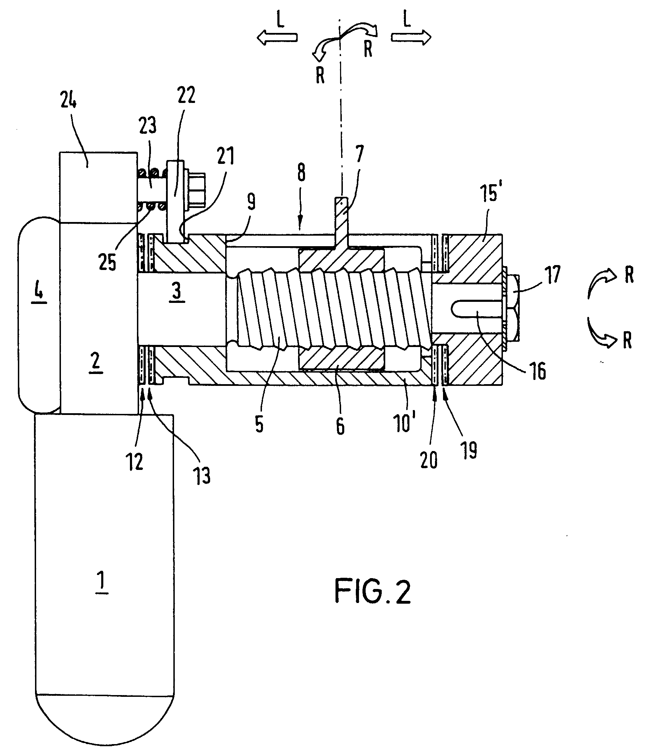

Bei der in Fig. 2 gezeigten Ausführungsform sind gleiche Bauteile mit dem gleichen Bezugszeichen versehen und die funktionsmäßig gleichen, jedoch baulich abgewandelten Bauteile sind mit Bezugszeichen mit einem Strich-Index versehen.

Der Aufbau dieser elektrischen Schaltvorrichtung unterscheidet sich gegenüber der Ausführungsform nach Fig. 1 im wesentlichen durch die Form der Verschiebemuffe 10', des Kupplungsflansches 15' und der Magnetspulenanordnung.

Im vorliegenden Fall ist die Verschiebemuffe 10' an ihrem dem Untersetzungsgetriebe 2 benachbarten Ende mit einer Ringnut 21 versehen, in die eine Schaltgabel 22 eingreift. Die Schaltgabel 22 ist mit dem Anker 23 eines Solenoids 24 versehen, der über eine Feder 25 aus seiner Spule herausgedrückt wird und bei Beaufschlagung der Spule in Fig. 2 gesehen nach links in den Solenoid 24 hineingezogen wird.

Daraus ergibt sich, daß bei nicht erregtem Solenoid 24 die Feder 25 die Verschiebemuffe 10' in Richtung des Kupplungsflansches 15' drückt und hierdurch eine drehfeste Verbindung über die radialen Kupplungsflächen 19 und 20 herstellt. Bei einer Drehung der Gewindespindel 5 kann somit wieder eine drehende Bewegung R ausgeführt werden.

Wird der Solenoid 24 erregt, so wird der Anker 23 in die Spule hineingezogen und die Schaltgabel 22 verschiebt die Verschiebemuffe 10' in Fig. 2 gesehen nach links, wodurch über die radialen Kupplungsflächen 12 und 13 eine drehfeste Verbindung zum feststehenden Gehäuse des Untersetzungsgetriebes 2 hergestellt wird.

Bei einer Drehung der Gewindespindel 5 ist somit die Verschiebemuffe 10' drehfest gehalten und die Drehung der Gewindespindel 5 führt zu einer linearen Bewegung der Mutter 6, wodurch der Schaltfinger 7 eine erwünschte lineare Bewegung L z.B. zum Einrücken einer Gangstufe ausführt.

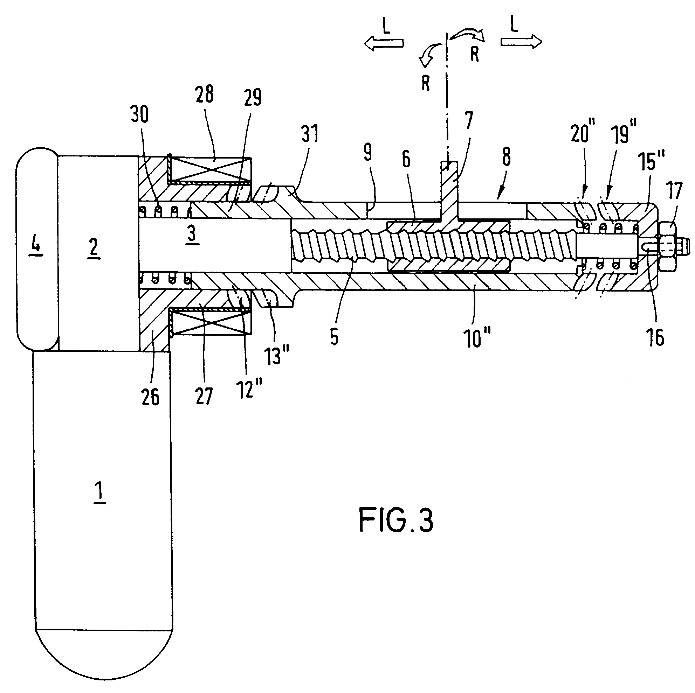

Bei der in Fig. 3 gezeigten Ausführungsform sind wieder die übereinstimmenden Bauteile mit den gleichen Bezugszeichen versehen und nur die in ihrer Bauform abgewandelten Bauteile sind mit einem Doppel-Strich-Index versehen.

Bei der in Fig. 1 gezeigten Ausführungsform ist benachbart dem Untersetzungsgetriebe 2 ein Flansch 26 mit einem Hülsenansatz 27 konzentrisch zum Ende 3 der Gewindespindel 5 angeordnet und der Hülsenansatz 27 nimmt eine Magnetspule 28 auf.

Die Verschiebemuffe 10'' ist an ihrem linken Ende mit einer Verlängerung 29 versehen, mit der sie sich in den Hülsenansatz 27 hinein erstreckt. Eine Schraubenfeder 30 innerhalb des Hülsenansatzes 27 drückt die Verschiebemuffe 10'' in Fig. 3 gesehen nach rechts, so daß sie wieder mit dem Kupplungsflansch 15'' in eine drehfeste Verbindung gelangt. In dieser Ausführungsform sind die radialen Kupplungsflächen 19'' und 20'' jedoch mit Verzahnungen nach Art einer Synchronanspitzung versehen.

Wird die Verschiebemuffe 10'' durch die Feder 30 nach rechts verschoben, so ergibt sich wieder, wie bereits erläutert, eine drehfeste Verbindung zwischen der Gewindespindel 5 und der Verschiebemuffe 10'' und es wird eine radiale Bewegung R ausgeführt.

Die Verschiebemuffe 10'' ist auf ihrer anderen Seite mit dem Hülsenansatz 29 versehen und benachbart dem Hülsenansatz 29 ist an einer Ringschulter 31 der Verschiebemuffe 10'' eine Kupplungsverzahnung 13'' nach Art einer Synchronanspitzung ausgebildet. In ähnlicher Weise ist am Hülsenansatz 27 eine Kupplungsverzahnung 12'' ausgebildet.

Wird die Magnetspule 28 mit Strom beaufschlagt, so wirkt der Hülsenansatz 29 der Verschiebemuffe 10'' als Anker dieser Solenoidanordnung und zieht die Verschiebemuffe 10'' in Fig. 3 gesehen nach links, wodurch eine drehfeste Verbindung zwischen dem am Untersetzungsgetriebe 2 fest angeordneten Flansch 26 und dem Hülsenansatz 27 und der Verschiebemuffe 10'' hergestellt wird. Eine Drehung der Gewindespindel 5 führt damit wieder zu einer linearen Bewegung der Gewindemutter 6 und damit des Schaltfingers 7 in linearer Richtung L.

Die in den Fig. 1 bis 3 gezeigten Ausführungsformen einer erfindungsgemäßen elektrischen Schaltvorrichtung stellen nur zweckmäßige Ausführungsbeispiele dar, es ist jedoch selbstverständlich, daß die Form der Linearführung für die Gewindemutter und die Form der radialen Kupplungsflächen mit ihren formschlüssigen Kupplungsverzahnungen vom Fachmann in einer Vielzahl von zweckmäßigen Konstruktionen abgeändert werden können, ohne das hierdurch der Schutzumfang der vorliegenden Erfindung verlassen wird.

Wesentlich ist es noch darauf hinzuweisen, daß, obwohl in den Ausführungsformen gemäß der Figuren 1 bis 3 eine Vorwählbewegung zum Schalten eines Wechselgetriebes immer mit einer radialen Bewegung beschrieben wurde und eine Einrückbewegung mit einer linearen Bewegung beschrieben wurde, es vollständig im Schutzumfang der vorliegenden Erfindung liegt, daß eine Vorwählbewegung für ein Wechselgetriebe durch eine lineare Bewegung erfolgt und die Einrückbewegung des Wechselgetriebes mit einer radialen Bewegung vorgenommen wird.

Das Wesentliche und der besondere Vorteil der vorliegenden Erfindung liegt eben darin, daß dadurch, daß beide Bewegungen, sowohl die drehende Bewegung als auch die lineare Bewegung durch die unmittelbare Ableitung von der von einem Elektromotor getriebenen Gewindespindel in ihrem Kraftverlauf in erwünschter Weise sehr genau und variabel gesteuert werden können, so daß die entsprechende Betätigung von z.B. Synchronisiereinrichtungen in einem Wechselgetriebe mit den entsprechend angepaßten Kräften erfolgen können.

## Patentansprüche

1. Elektrische Schaltvorrichtung für Wechselgetriebe von Kraftfahrzeugen, mit einem mit den Gangschaltelementen des Wechselgetriebes zusammenwirkenden, in zwei erforderlichen, im wesentlichen quer zueinander verlaufenden Schaltbewegungen (R und L) bewegbaren Getriebeschaltgliedern, wobei eine lineare Bewegung (L) von einem Elektromotor (1), der eine Gewindespindel (5) mit einer darauf angeordneten, über eine Linearführung (8) gegen Drehung festgehaltenen und axial geführten Mutter (6) kontrolliert dreht, bereitgestellt wird, und
- auch eine drehende Bewegung (R) von der Gewindespindel (5) abgeleitet wird, indem zwischen der Gewindespindel (5) und der Linearführung (8) der Mutter (6) über eine Kupplung (19/20) eine zeitweilige, kontrollierte, drehfeste Verbindung herstellbar ist, **dadurch gekennzeichnet**, daß
- die Linearführung (8) der Mutter in Form einer auf der Gewindespindel (5) begrenzt axial bewegbar und drehbar angeordneten Verschiebemuffe (10) ausgebildet ist, die an ihren Enden radiale Kupplungsflächen (13 und 20) aufweist, über die sie wechselweise mit
- einer am Untersetzungsgetriebe (2) vorgesehenen radialen Kupplungsfläche (12) stationär festgehalten oder über eine an einem mit der Gewindespindel (5) drehfest verbundenen Kupplungsflansch (15) vorgesehenen radialen Kupplungsfläche (19) drehfest mit der Gewindespindel (5) verbindbar ist und wobei
- die Kupplungsflächen (12 und 19) unmittelbar benachbart zu Magnetspulen (11 und 18) angeordnet sind.

2. Elektrische Schaltvorrichtung für Wechselgetriebe von Kraftfahrzeugen, mit einem mit den Gangschaltelementen des Wechselgetriebes zusammenwirkenden, in zwei erforderlichen, im wesentlichen quer zueinander verlaufenden Schaltbewegungen (R und L) bewegbaren Getriebeschaltgliedern, wobei eine lineare Bewegung (L) von einem Elektromotor (1), der eine Gewindespindel (5) mit einer darauf angeordneten, über eine Linearführung (8) gegen Drehung festgehaltenen und axial geführten Mutter (6) kontrolliert dreht, bereitgestellt wird, und
- auch eine drehende Bewegung (R) von der Gewindespindel (5) abgeleitet wird, indem zwischen der Gewindespindel (5) und der Linearführung (8) der Mutter (6) über eine Kupplung (19/20) eine zeitweilige, kontrollierte, drehfeste Verbindung herstellbar ist, **dadurch gekennzeichnet**, daß
- die Linearführung (8) der Mutter in Form einer auf der Gewindespindel (5) begrenzt axial bewegbar und drehbar angeordneten Verschiebemuffe (10') ausgebildet ist, die an ihren Enden radiale Kupplungsflächen (13 und 20) aufweist, über die sie wechselweise mit
- einer am Untersetzungsgetriebe (2) vorgesehenen radialen Kupplungsfläche (12) stationär festgehalten oder über eine an einem mit der Gewindespindel (5) drehfest verbundenen Kupplungsflansch (15) vorgesehenen radialen Kupplungsfläche (19) drehfest mit der Gewindespindel (5) verbindbar ist und wobei
- die Verschiebemuffe (10') an ihrem einen Ende eine Ringnut (21) aufweist, in die eine Schaltgabel (22) eingreift, die unmittelbar von dem Anker (23) eines Elektromagneten (24) betätigbar ist.

3. Elektrische Schaltvorrichtung für Wechselgetriebe von Kraftfahrzeugen, mit einem mit den Gangschaltelementen des Wechselgetriebes zusammenwirkenden, in zwei erforderlichen, im wesentlichen quer zueinander verlaufenden Schaltbewegungen (R und L) bewegbaren Getriebeschaltgliedern, wobei eine lineare Bewegung (L) von einem Elektromotor (1), der eine Gewindespindel (5) mit einer darauf angeordneten, über eine Linearführung (8) gegen Drehung festgehaltenen und axial geführten Mutter (6) kontrolliert dreht, bereitgestellt wird, und
- auch eine drehende Bewegung (R) von der Gewindespindel (5) abgeleitet wird, indem zwischen der Gewindespindel (5) und der Linearführung (8) der Mutter (6) über eine Kupplung (19/20) eine zeitweilige, kontrollierte, drehfeste Verbindung herstellbar ist, **dadurch gekennzeichnet**, daß
- die Linearführung (8) der Mutter (6) in Form einer auf der Gewindespindel (5) begrenzt axial bewegbar und drehbar angeordneten Verschiebemuffe (10'') ausgebildet ist, die an ihren Enden Kupplungsverzahnungen (20'' und 13'') aufweist, über die sie wechselweise mit
- einer an einem am Untersetzungsgetriebe (2) festgelegten Hülsenansatz (27) vorgesehenen Kupplungsverzahnung (12'') stationär festgehalten oder über an einem mit der Gewindespindel (5) drehfest verbundenen Kupplungsflansch (15'') vorgesehenen radialen Kupplungsverzahnungen (19'' und 20''), die nach Art einer Synchronanspitzung ausgebildet sind, mit der Gewindespindel (5) verbindbar ist und wobei
- die Verschiebemuffe (10'') mit einem Teil (29) unmittelbar den Anker eines Elektromagneten (28) bildet.

## Claims

1. An electric gearshift mechanism for change-speed gearboxes of motor vehicles comprising a gear shifting member that cooperates with the gear shifting elements of the change-speed gearbox and can be moved in two necessary and substantially mutually transverse shifting movements (R) and L), wherein a linear movement (L) is furnished by an electric motor (1) which effects controlled rotation of a threaded spindle (5) carrying a nut (6) which is guided axially and held fast against rotation by linear guide means (8) and
- a rotary movement (R) is also derived from the threaded spindle (5) by producing, through a clutch (19/20), a temporary, controlled non-rotatable connection between the threaded spindle (5) and the linear guide means (8) of the nut (6).
characterised in that
- the linear guide means (8) for the nut is in the form of a sliding sleeve (10) mounted on the threaded spindle (5) for limited axial and rotary movement and having at its ends radial clutch surfaces (13 and 20) through which said sleeve can alternately
- be held stationary by a radial clutch surface (12) provided on the reduction gearbox (2) or be connected non-rotatably to the threaded spindle (5) by a radial clutch surface (19) provided on a clutch flange (15) connected non-rotatably to the threaded spindle (5),
- the clutch surfaces (12 and 19) being located immediately adjacent to magnet coils (11 and 18).

2. An electric gearshift mechanism for change-speed gearboxes of motor vehicles comprising a gear shifting member that cooperates with the gear shifting elements of the change-speed gearbox and can be moved in two necessary and substantially mutually transverse shifting movements (R) and L), wherein a linear movement (L) is furnished by an electric motor (1) which effects controlled rotation of a threaded spindle (5) carrying a nut (6) which is guided axially and held fast against rotation by linear guide means (8) and
- a rotary movement (R) is also derived from the threaded spindle (5) by producing, through a clutch (19/20), a temporary, controlled non-rotatable connection between the threaded spindle (5) and the linear guide means (8) of the nut (6),
characterised in that
- the linear guide means (8) for the nut is in the form of a sliding sleeve (10') mounted on the threaded spindle (5) for limited axial and rotary movement and having at its ends radial clutch surfaces (13 and 20) through which said sleeve can alternately
- be held stationary by a radial clutch surface (12) provided on the reduction gearbox (2) or be connected non-rotatably to the threaded spindle (5) by a radial clutch surface (19) provided on a clutch flange (15) connected non-rotatably to the threaded spindle (5),
- the sliding sleeve (10') having at one end an annular groove (21) into which a shifter fork (22) which can be actuated directly by the armature (23) of an electromagnet (24) engages.

3. An electric gearshift mechanism for change-speed gearboxes of motor vehicles comprising a gear shifting member that cooperates with the gear shifting elements of the change-speed gearbox and can be moved in two necessary and substantially mutually transverse shifting movements (R) and (L), wherein a linear movement (L) is furnished by an electric motor (1) which effects controlled rotation of a threaded spindle (5) carrying a nut (6) which is guided axially and held fast against rotation by linear guide means (8) and
- a rotary movement (R) is also derived from the threaded spindle (5) by producing, through a clutch (19/20), a temporary, controlled non-rotatable connection between the threaded spindle (5) and the linear guide means (8) of the nut (6).
characterised in that
- the linear guide means (8) for the nut (6) is in the form of a sliding sleeve (10") mounted on the threaded spindle (5) for limited axial and rotary movement and having at its ends clutch tooth systems (20" and 13") through which said sleeve can alternately
- be held stationary by a clutch tooth system (12") provided on a projecting sleeve (27) fixed to the reduction gearbox (2) or be connected non-rotatably to the threaded spindle (5) by radial clutch tooth systems (19" and 20") formed in the manner of a synchroniser cone provided on a clutch flange (15") connected non-rotatably to the threaded spindle (5),
- the sliding sleeve (10") directly forming, with a portion (29) thereof, the armature of an electromagnet (28).

## Revendications

1. Dispositif de commande électrique pour boîtes de vitesses à engrenages de véhicules automobiles, comprenant des organes mobiles de commande de boîte coopérant avec les éléments de commande de rapports d'engrenages de la boîte et déplaçables pour effectuer deux mouvements de commande nécessaires qui sont essentiellement transversaux l'un par rapport à l'autre (R et L), dont l'un est un mouvement linéaire (L) fourni par un moteur électrique (1) qui fait tourner de façon contrôlée une broche filetée (5) sur laquelle est disposé un écrou (6) empêché de tourner et guidé axialement par un guidage linéaire (8), et l'autre est un mouvement rotatif (R) qui est également dérivé de la broche filetée (5), du fait que, par l'intermédiaire d'un accouplement (19/20), une solidarisation en rotation temporaire contrôlée peut être établie entre la broche filetée (5) et le guidage linéaire (8) de l'écrou (6), caractérisé en ce que
- le guidage linéaire (8) de l'écrou est réalisé sous la forme d'un manchon coulissant (10) disposé axialement mobile de façon limitée et rotatif sur la broche filetée (5), manchon qui présente, à ses extrémités, des faces radiales d'accouplement (13 et 20) par lesquelles il peut, alternativement,
- être maintenu stationnaire à l'aide d'une face radiale d'accouplement (12) prévue sur un réducteur de vitesse (2), ou être solidarisé en rotation avec la broche filetée (5) à l'aide d'une face radiale d'accouplement (19) prévue sur une bride d'accouplement (15) solidarisée en rotation avec la broche (5),
- les faces d'accouplement (12 et 19) étant disposées à proximité immédiate de bobines d'électroaimant (11 et 18).

2. Dispositif de commande électrique pour boîtes de vitesses à engrenages de véhicules automobiles, comprenant des organes mobiles de commande de boîte coopérant avec les éléments de commande de rapports d'engrenages de la boîte et déplaçables pour effectuer deux mouvements de commande nécessaires qui sont essentiellement transversaux l'un par rapport à l'autre (R et L), dont l'un est un mouvement linéaire (L) fourni par un moteur électrique (1) qui fait tourner de façon contrôlée une broche filetée (5) sur laquelle est disposé un écrou (6) empêché de tourner et guidé axialement par un guidage linéaire (8), et l'autre est un mouvement rotatif (R) qui est également dérivé de la broche filetée (5), du fait que, par l'intermédiaire d'un accouplement (19/20), une solidarisation en rotation temporaire contrôlée peut être établie entre la broche filetée (5) et le guidage linéaire (8) de l'écrou (6), caractérisé en ce que
- le guidage linéaire (8) de l'écrou est réalisé sous la forme d'un manchon coulissant (10') disposé axialement mobile de façon limitée et rotatif sur la broche filetée (5), manchon qui présente, à ses extrémités, des faces radiales d'accouplement (13 et 20) par lesquelles il peut, alternativement,
- être maintenu stationnaire à l'aide d'une face radiale d'accouplement (12) prévue sur un réducteur de vitesse (2), ou être solidarisé en rotation avec la broche filetée (5) à l'aide d'une face radiale d'accouplement (19) prévue sur une bride d'accouplement (15) solidarisée en rotation avec la broche (5),
- le manchon coulissant (10') présentant, à l'une de ses extrémités, une gorge annulaire (21) dans laquelle s'engage une fourchette de manoeuvre (22) pouvant être actionnée directement par l'armature (23) d'un électroaimant (24).

3. Dispositif de commande électrique pour boîtes de vitesses à engrenages de véhicules automobiles, comprenant des organes mobiles de commande de boîte coopérant avec les éléments de commande de rapports d'engrenages de la boîte et déplaçables pour effectuer deux mouvements de commande nécessaires qui sont essentiellement transversaux l'un par rapport à l'autre (R et L), dont l'un est un mouvement linéaire (L) fourni par un moteur électrique (1) qui fait tourner de façon contrôlée une broche filetée (5) sur laquelle est disposé un écrou (6) empêché de tourner et guidé axialement par un guidage linéaire (8), et l'autre est un mouvement rotatif (R) qui est également dérivé de la broche filetée (5), du fait que, par l'intermédiaire d'un accouplement (19/20), une solidarisation en rotation temporaire contrôlée peut être établie entre la broche filetée (5) et le guidage linéaire (8) de l'écrou (6), caractérisé en ce que
- le guidage linéaire (8) de l'écrou (6) est réalisé sous la forme d'un manchon coulissant (10") disposé axialement mobile de façon limitée et rotatif sur la broche filetée (5), manchon qui présente, à ses extrémités, des dentures d'accouplement (20" et 13") par lesquelles, alternativement, il peut
- être maintenu stationnaire à l'aide d'une denture d'accouplement (12") prévue sur un prolongement tubulaire (27) immobilisé sur un réducteur de vitesse (2), ou être relié à la broche filetée (5) à l'aide de dentures radiales d'accouplement (19" et 20") prévues respectivement sur le manchon et sur une bride d'accouplement (15") solidarisée en rotation avec la broche filetée (5), dentures qui sont réalisées avec des conformations coniques de synchronisation,
- une partie (29) du manchon coulissant (10") formant directement l'armature d'un électroaimant (28).
